# EUROPEAN PATENT APPLICATION

(11) **EP 2 018 013 A1**
(43) Date of publication of application: **21.01.2009**
(21) Application number: 07075614.3
(22) Date of filing: 17.07.2007
(51) Int. Cl.: H04L 29/06

(54) **Method and telecommunications apparatus for protecting VoIP services against attacks**

(71) Applicant: Fraunhofer-Gesellschaft zur Förderung der angewandten Forschung e.V., 80686 München (DE)
(72) Inventor: Fiedler, Jens, 13595 Berlin (DE); Ehlert, Sven, 10247 Berlin (DE)
(74) Representative: Gross, Felix

(57) **Abstract**

The invention relates to a firewall with deep packet inspection and provides for a method and a telecommunications apparatus for protecting services provided over a packet network such as internet telephony services against attacks. The method comprises the steps of storing at least one data frame of data traffic related to a service to be protected in a frame cache (4), providing a copy of the at least one data frame to a reconstruction unit (2), reconstructing a message contained in the at least one data frame, applying filtering rules to the reconstructed message, providing a verdict on the message on the basis of the filtering rules and, dependent on the verdict, allowing the at least one data frame stored in the frame cache (4) to proceed to its destination or not to proceed to its destination.

## Description

The present invention regards a method of and a telecommunications apparatus for protecting services provided over a packet network against attacks. In one embodiment, the present invention provides a method of and a telecommunications apparatus for protecting SIP-based VOIP services against arbitrary attacks such as Denial-of-Service attacks. Another embodiment regards reassembling buffer for a telecommunication security solution to allow content-based traffic monitoring and analysis.

The Session Initiation Protocol (SIP) has established itself as the de-facto standard for current Voice-over-IP (VoIP) networks. Several providers are offering Internet Telephony services based on SIP. The popularity of SIP will likely rise even more with the advent of the IP Multimedia System and the next-generation telephony network which is also based on SIP.

SIP is deployed in a client-server infrastructure where SIP clients (User Agent clients) contact a central SIP Proxy (i.e. a server) to manage ongoing sessions. It is a text based protocol designed to establish or terminate a session among two or more partners. The message format is derived from the HTTP protocol, with message headers and corresponding values, e.g. "From: user@sip.org" to denote the sender of a message.

As it is generally deployed in the open internet, SIP infrastructures are a target for different attacks from the outside world, including Denial-of-Service attacks, Message Tampering, Call Hijacking and other threats.

The problem underlying the present invention is thus to provide for an effective method and apparatus that allow to protect services such as VolP services provided over a packet network against attacks.

This problem is solved by a method with the features of claim 1 and a telecommunications apparatus with the features of claim 17. Embodiments of the invention are identified in the dependent claims.

Accordingly, in one aspect of the invention there is provided a method for protecting services provided over a packet network in which a message included in at least one data frame that is stored in a frame cache is reconstructed. After reconstruction, filtering rules are applied to the reconstructed message. A verdict is issued on the message on the basis of the filtering rules and, dependent on the verdict, at least one data frame stored in the frame cache is allowed or not allowed to proceed to its destination.

In one embodiment, filtering is performed not on a single data packet such as an IP packet but on a reconstructed message that is based on a plurality of data packets included in the data frames stored in the frame cache. In the same manner, the verdict to drop or accept regards not a single data packet but all data packets included in the frames stored in the frame cache.

The packet network can be any packet switched network such as the internet. Dependent on the service the packet network provides in a specific context, the network may be identified, e.g., as a SIP-network or a VOIP-network.

The data frame stored in the frame cache can be any frame on level 2 of the OSI reference model (ITU-T recommendation X.200), and is thus a datagram on the data link layer. It can have a fixed or variable length. An example are Ethernet frames.

In an embodiment of the invention the step of reconstructing a message includes defragmentation of the at least one frame into one or a plurality of IP packets, reconstructing the IP packets into UDP packets or TCP data streams and obtaining a message from the UDP packets or TCP data streams. In this regard, it is pointed out that according to the relevant standards one frame is not allowed to have more than one IP fragment. One frame thus includes one IP packet or one fragment of an IP packet. Therefore, depending on the amount of frames stored in the frame cache, defragmentation may lead to one IP packet or several IP packets.

The reconstructed message in one embodiment is a message of a protocol associated with the service to be protected, such as an internet telephony protocol like the Session Initiation Protocol (SIP). To successfully achieve reconstruction of protocol messages delivered in TCP streams, the solution has knowledge of the structure that is to be monitored and protected.

The filtering rules in one embodiment are thus applied to a reconstructed protocol message which has been reconstructed by the steps of packet defragmentation and reconstructing of data streams of level 3 and/or 4 of the OSI reference model such as UDP packets or TCP streams.

In a further embodiment, the verdict does not only regard the data frames which are actually stored in the frame cache, but all frames that belong to the same IP packet, UDP datagram or TCP stream. Accordingly, all frames that belong to a message that has been identified as presenting an attack are marked and not further routed to their destination such as a SIP registrar.

In a further embodiment, the filtering rules which are applied on the reconstructed message are not fixed but may be modified or filtering rules may be added. In one embodiment, new filtering rules are created on the basis of an analysis of reconstructed messages. More particularly, to this end at least one analyser unit and at least one decider unit are provided, the analyser unit analyzing messages that have been reconstructed and the decider unit setting or modifying the filtering rules on the basis of such analysis. Such approach is asynchronous in that reconstructed messages are on the one hand immediately the object of a filter function that applies filtering rules to the reconstructed message. On the other hand, the reconstructed messages are further analyzed and, eventually, such analysis will lead to new or modified filtering rules.

For example, if there is a Denial-of-Service Attack, it will take some time until the attack is realized and appropriate filter rules are established. The scanning, reconstruction and filtering of the data stored in the frame cache, however, is carried out continuously and it may be that the filtering at the beginning of an attack does not realize messages that belong to the attack. Accordingly, the filtering of reconstructed messages and the providing of new filtering rules on the basis of an analysis of the reconstructed messages happens in an asynchronous manner.

In a further embodiment, a verdict may be issued by a userspace message inspection program. In such embodiment, the filtering rules of the filter unit preferably are in kernel space and further filtering rules are provided by a userspace message inspection program. A kernel/userspace interface exists to this end which feeds a userspace program with messages, which sends back verdicts.

In a further embodiment, at least one data frame is forked before it is stored in the frame cache. Forking means that the data frame is duplicated, one copy being stored in the frame cache and the other copy being used for packet defragmentation and reassembly. In one embodiment, after packet defragmentation and reassembly, the message is forwarded to an Analysis layer (scanning), as well as to a Rule Processing entity for inspection (filtering).

In another aspect of the present invention there is provided a telecommunications apparatus comprising
- a frame cache for storing at least one data frame of data traffic related to a service to be protected,
- a reconstruction unit reconstructing a message contained in the at least one data frame,
- a filter unit comprising filtering rules and applying the filtering rules to a reconstructed message provided by the reconstruction unit,
- the filter unit further being adapted to provide a verdict on the message on the basis of the filtering rules, and
- means that, dependent on the verdict, allow or do not allow the at least one data frame stored in the frame cache to proceed to its destination.

The different units and means of the telecommunications apparatus correspond to different functionalities. They do not necessarily correspond to specific hardware structure and may be implemented by software only.

The invention will next be explained in more detail below on the basis of exemplary embodiments with references to the Figures, in which:
- Figure 1: shows schematically elements of a telecommunications apparatus in accordance with principles of the present invention;
- Figure 2: shows in more detailed an embodiment of a telecommunications apparatus in accordance with principles of the present invention;
- Figure 3: shows schematically access from the Internet to a point of service provisioning, the point of service provisioning being proceeded by a point of protection that includes a telecommunication apparatus according to Figures 1 or 2; and
- Figure 4: shows an exemplary architecture of a point of protection including a telecommunications apparatus according to Figures 1 or 2.

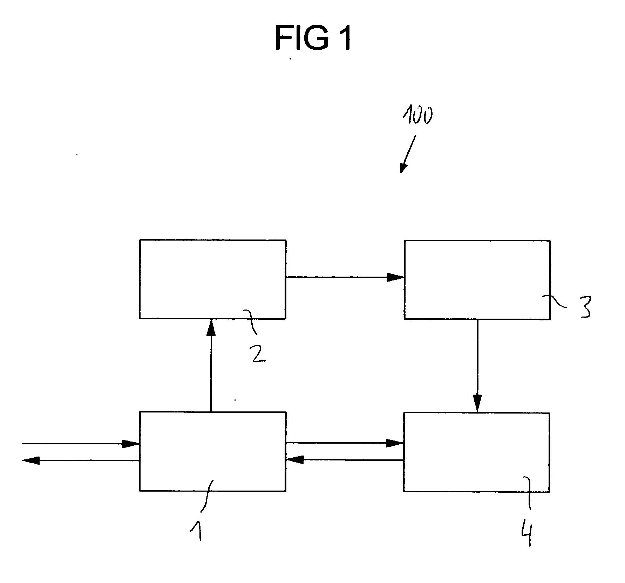

Figure 1 depicts a telecommunications apparatus 100 in accordance with principles of the present invention. The telecommunications apparatus 100 provides for scanning and filtering of data traffic and, therefore, will also be referred to as a Filter and Scanner Node.

The telecommunications apparatus 100 comprises a bridge 1, a reconstruction unit 2, a filter unit 3 and a frame cache 4, all of which are depicted schematically.

The bridge 1 receives traffic from the internet and/or a point of service provisioning and sends traffic to the internet and/or the point of service provisioning. The service may be a SIP-service or any other internet telephony service. One or a plurality of data frames of incoming traffic are copied and sent to the frame cache 4 and stored in the frame cache 4. They wait in the frame cache 4 for a verdict. The verdict is provided by the filter unit 3 which applies stored filtering rules on a reconstructed message received from the reconstruction unit 2, as will be explained further below. The verdict of an applied rule is one of the following:

First, one possible verdict is to accept a message. This verdict is issued in case the message is harmless. The message is then passed on and, to this end, the data frames stored in frame cache 4 are sent over bridge 1 to the internet and/or a point of service provisioning. Afterwards, one or several new frames are stored in the frame cache 4.

A second possible verdict is to drop the message. This verdict is issued if the message is malicious.

A third possible verdict is to accept the message, but flag it a "probably harmful" to raise the user's attention.

A fourth possible verdict is to continue the application of rules in the filter unit 3. Accordingly, further rules need to be applied upon the message before making a final decision about the message which would be either the accept message or the drop message.

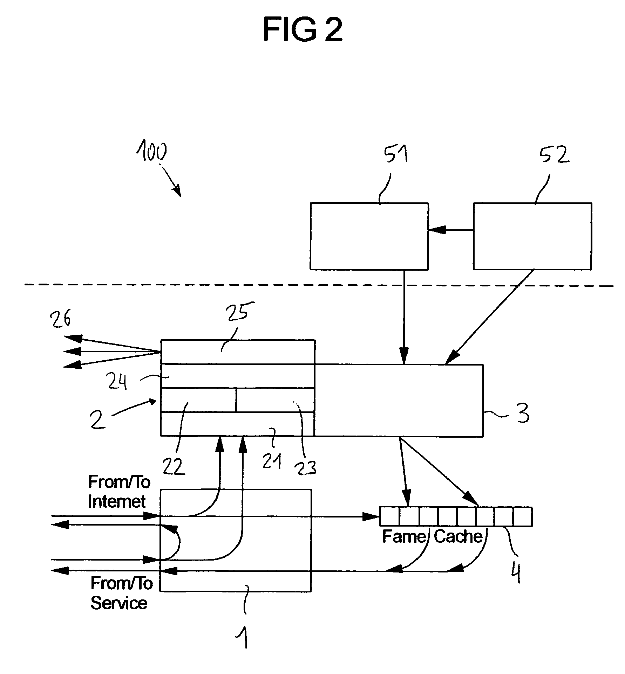

For the filter unit 3 being able to apply its rules on specific content, the information stored in frame cache 4 is duplicated by bridge 1 and sent to the reconstruction unit 2. The reconstruction unit 2 provides for packet defragmentation and reconstruction of packet streams. As will be explained in more detail with respect to Figure 2, e.g., IP defragmentation is carried out and UDP packets and TCP streams are reconstructed. From the reconstructed data streams, messages are obtained such as SIP messages. The messages are fed into the filter unit 2 for the application of filtering rules and issuance of a verdict.

Figure 2 shows in more detail an embodiment of the telecommunications apparatus of Figure 1. In this embodiment, the bridge 1 may be an Ethernet bridge which intercepts all traffic on MAC layer, therefore not changing anything about the frames. If frames are allowed to leave the telecommunications apparatus, they leave exactly as they entered. This also includes all MAC layer information.

One or several frames which have been received by bridge 1 are stored in the kernel space of the telecommunications apparatus 100. The one or several frames are then replicated and one copy is sent to the reconstruction unit 2, another copy is stored in frame cache 4, awaiting its verdict from the filter unit 2 applying filtering rules on a reconstructed message.

As frames from the bridge 1 in one embodiment are Ethernet frames, IP-defragmentation is performed in a defragmentation unit 21 in order gain full IP packets. After this step, UDP packets or TCP streams are reconstructed in a stream reconstruction unit 22, 23. During this process, references to the involved frames in the kernel queue are stored along with the reconstructed streams. A message such as a SIP message is obtained from the reconstructed UDP packets or TCP data streams by an extractor unit 24. The reconstructed message is fed into the filter unit 3 for application if the filtering rules.

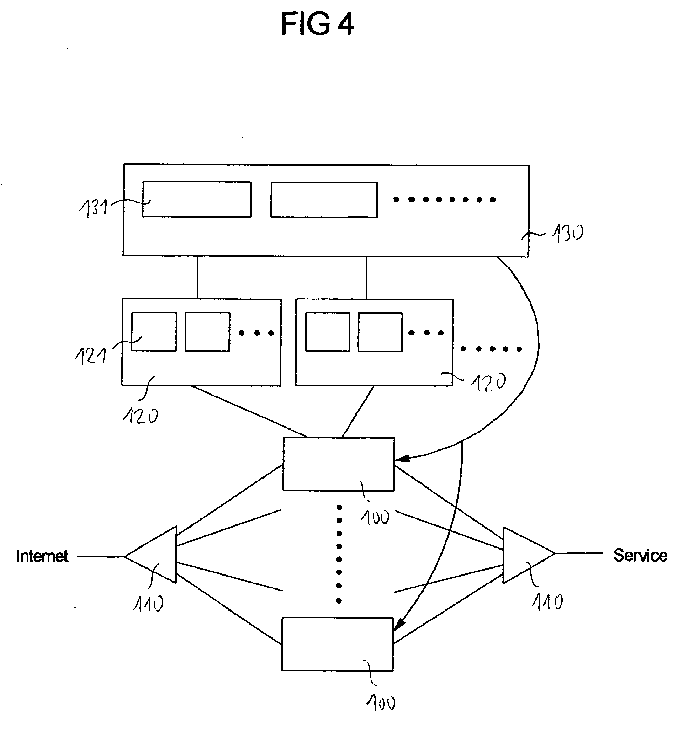

In one embodiment, the reconstructed message are further sent to an analyser node along with protocol meta data, like IP source addresses, number of fragments, timing information, etc. This embodiment is indicated by arrows 26 and will be further discussed with respect to Figure 4 further below.

The extracted messages undergo inspection by the kernel space rule chains of filter unit 2. In one embodiment, they may as well undergo user space decision as provided by a userspace message inspection unit 51. For this purpose, a dedicated kernel/userspace interface feeds a custom user spacer daemon with messages, which then sends back verdicts.

A filter rule control unit 52 interacts with the userspace message inspection unit 51 and the filter unit 2. The filter rule control unit 52 sets and deletes rules both in the userspace message inspection unit 51 and in the kernel based filter unit 2 (which represents a rule processing unit). It forms the interface between the complete filter node and an extern decision plane. In other words, the rules are set and removed by means of the filter rule control unit 52. It permanently opens network connections to one or several decider nodes through which respective commands are sent to the filter node.

Rules consist of conditions and an action to be taken, if the conditions are met. A condition can be any IP, UDP, TCP or ICMP property. Additionally, a condition may be a regular expression which is applied to a message such as a SIP message. Accordingly, in one embodiment, it is possible to decide about a message also by its content.

It is pointed out that the telecommunications apparatus 100 and the method described herein in one embodiment do not make decisions on single IP packets, but reconstruct a message based on a plurality of packets included in a plurality of frames and make a decision with respect to such frames. In one embodiment, a number of frames is stored in frame cache 4 and used for reconstruction that is sufficient to reconstruct a complete message.

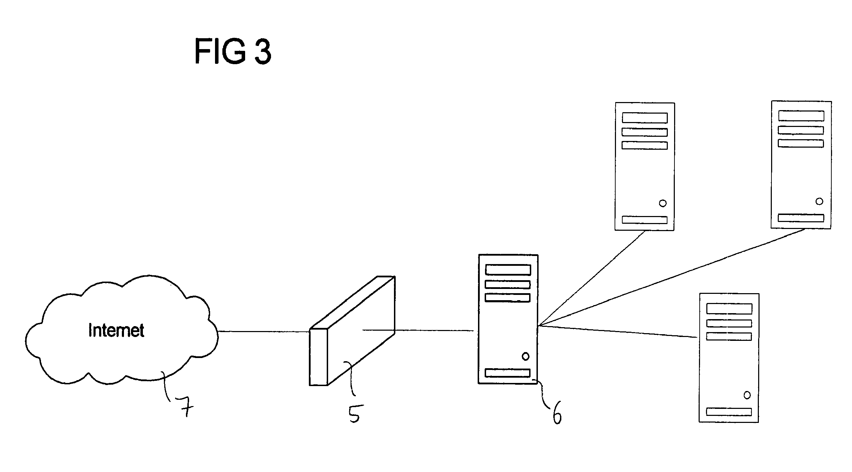

Figure 3 shows a telecommunications arrangement in which a point of protection (PoP) 5 is arranged before a point of service provisioning 6. The point of protection 5 includes a telecommunications apparatus as discussed with respect to Figures 1 and 2 and in one embodiment further components as will be described in an exemplary embodiment with respect to Figure 4. The point of service provisioning 6 can be, for example, a proxy server, a registrar such as a SIP-registrar, a back-to-back user agent, a subnet or a server farm as shown in the embodiment of Figure 3.

All traffic addressed to the point of service provisioning 6 must be inspected and a decision must be taken whether to pass messages or streams to the point of service provisioning 6 or not. To this end, the point of protection 5 is inserted between the Internet 7 and the point of service provisioning 6. In one embodiment, the point of protection 5 includes extended features tailored to SIP based VolP signalling traffic. Features are scanning, analysis and filtering functionality between the point of service provisioning 6 and the Internet 7 to which a mixture of legal users and malicious entities is connected.

The point of service 5 in one embodiment is completely invisible from the networking point of view. It is not possible to gain knowledge about its existence by analyzing the network traffic. If the point of service 5 were visible by some means, it could be identified and possibly circumvented or even attacked. To this end, no IP routing is carried out. If the point of service 5 acted as a router it would modify IP packets, therefore its existence could be guessed from the outside. Further, no SIP proxying is carried out. A very easy way to intercept SIP traffic is to act as a proxy and use the Record-Route feature from SIP to stay in the message path. This, of course, announces the point of service 5 to every VolP user, regardless whether it is doing proxying or acts as Back-to-Back User Agent. Even here, the PoP can be circumvented by addressing the PoSP directly, e.g. by its IP address.

Figure 4 shows an embodiment of a point of protection 5 as discussed with respect to Figure 3. The architecture of Figure 4 includes a plurality of telecommunications apparatuses or filter and scanner nodes (FSNs) 100 as discussed with respect to Figures 1 and 2. There are further provided transport level load balancers 110, analysers 120 and a decider 130.

The Transport Level Load Balancer (TLLB) 110 has the purpose to scale over the FSNs, as these are expected to be exposed to high network and rule processing load. The TLLB distributes frames, holding IP fragments, over multiple FSNs. Therefore it must be guaranteed, that frames belonging to the same IP packet, UDP datagram and/or TCP stream are delivered to the same FSN, as they are expected to reassemble full SIP messages before applying rules. If, e.g., IP packets for a single TCP stream arrive at different FSNs, none of them will be able to reconstruct the TCP stream and the contained SIP message. The TLLB 110 also works in Ethernet bridge mode, thus does not change any incoming frames. In Figure 4, two TLLBs 110 are depicted. This is due to the fact, that, e.g., responses from the Point of Service Provisioning (PoSP) are sent back to the originator over the same TCP stream, as it was received on. Therefore returning TCP messages must pass the related FSN in order to keep the TCP state consistent.

The Analyzer is the bottom half of the intelligence of the detection architecture. It analyzes incoming traffic from the internet and outgoing traffic from the PoSP. This is necessary to keep track of the state of ongoing sessions. An analyser unit or node 120 includes the low level functions for each detection algorithm in the system. A low level function is the part of a detection algorithm 121, which must deal directly with the message flow. Low level functions are expected to produce a result, which can be used along with the results of the other analyzer nodes to decide about the start of an attack, its status and its end. Analyzer nodes 120 are running in parallel to allow easy scaling of the analysis load, which depends on the number and complexity of the deployed detection algorithms, as well as on the expected network load situation.

In a single analyzer node 120, incoming messages are centrally parsed by a high performance SIP parser. The parsed SIP message along with all received meta information and the original message buffer is then presented to all loaded detection algorithms. They can now easily apply their detection techniques and produce an algorithm specific output, describing the current attack situation, according to that specific algorithm. Therefore, it is possible, that an algorithm A detects a possible attack, while algorithm B does not. The results of each algorithm are then sent to the decider node 130.

The Decider 130 is the top half of the intelligence of the architecture. It gathers the output from the analyzers 120 and decides about the actual attack situation. It hosts an entity 131 for each detection algorithm, which is capable to correlate the output of its specific analyzer bottom half function. The decider itself can also be scaled up, by deploying a dedicated decider node for each algorithm. The decider node 130 receives incoming reports from the analyzer nodes 120 and delivers them to the corresponding algorithm specific decider modules 131. Modules 131 decide, whether an attack has been launched, and what can be done to counter it. Rules are created for the filter nodes 3 of the FSNs 100, as discussed above. The filtering rules block all malicious traffic to the PoSP matching the rules created by a decider module. Thus it is possible to decide when the attack is over so the created rules can be removed.

The rule cache entity features static rules, which are created by human beings, or were taken from other systems, where they approved to suppress certain static types of attacks (preset rules). Rules consist of protocol specific condition, like addresses for IP, or port numbers for UDP/TCP, but can also be regular expressions for content matching, or even complex scripts for user space based filtering engines.

An administrative console is the central interaction point for the user. Here, individually extension modules can be dynamically started and stopped and the status of each component is delivered to the user. Monitoring, detection and prevention messages and alarms are also gathered at this point.

One feature of an embodiment of the present invention is that the rules in the filter unit 2 are constantly modified and adapted in accordance with incoming traffic. More particularly, the messages extracted in the reconstruction unit 3 are sent not only to the filter unit 3 but also to one or several analysers 120 and from the analyser 120 to the decider 130. The decider 130, in accordance with the results of the previous analysis, is able to set new or adapted rules in the filter unit 2. For example, if there is a Denial-of-Service Attack with millions of requests, the analysers 120 will recognize such attack after some time and the decider 130 will provide rules of how to detect messages belonging to this attack and set the rules in the filter unit 2 accordingly.

## Claims

1. A method of protecting services provided over a packet network against attacks, the method comprising
- storing at least one data frame of data traffic related to a service to be protected in a frame cache (4),
- providing a copy of the at least one data frame to a reconstruction unit (2),
- in the reconstruction unit (2), reconstructing a message contained in the at least one data frame,
- applying filtering rules to the reconstructed message,
- providing a verdict on the message on the basis of the filtering rules,
- dependent on the verdict, allowing or not allowing the at least one data frame stored in the frame cache (4) to proceed to its destination.

2. The method of claim 1, **characterized in that** the step of reconstructing a message includes
- defragmentation of the at least one data frame into one or a plurality of IP packets,
- reconstructing the IP packets into UDP packets or TCP data streams,
- obtaining a message from the UDP packets or TCP data streams.

3. The method of claim 1 or 2, **characterized in that** the reconstructed message is a message of a protocol associated with the service to be protected.

4. The method of claim 3, **characterized in that** the reconstructed message is a message of an internet telephony protocol.

5. The method of claim 4, **characterized in that** the reconstructed message is a message of the Session Initiation Protocol (SIP).

6. The method of any of claims 1 to 5, **characterized in that** dependent on the verdict, not only the at least one data frame stored in the frame cache (4) is allowed to proceed to its destination or not allowed to proceed to its destination but also all frames belonging to the same IP packet, UDP datagram or TCP stream as the data of the at least one frame.

7. The method of any of claims 1 to 6, **characterized in that** the filtering rules are modified or added.

8. The method of claim 7, **characterized in that** new filtering rules are created on the basis of an analysis of reconstructed messages.

9. The method of claim 8, **characterized in that** the creation of new filtering rules on the basis of an analysis of reconstructed messages is asynchronous with the application of filtering rules to reconstructed messages.

10. The method of any of claims 1 to 9, **characterized in that** a verdict is issued by a userspace message inspection program.

11. The method of any of claims 1 to 10, **characterized in that** the packet network is the internet (7) and the service to be protected is a Voice-over-IP (VoIP) service provided through the Session Initiation Protocol (SIP) or another internet telephony protocol.

12. The method of any of claims 1 to 11, **characterized in that** the at least one data frame is stored in a frame cache (4) of variable size, the size being adaptable at least to the structure of the data of the data traffic and/or the application to which the data traffic belongs.

13. The method of any of claims 1 to 12, **characterized in that** the filtering rules comprise a plurality of algorithms which are applied on a message.

14. The method of any of claims 1 to 13, **characterized in that** the at least one data frame is forked before being stored in the frame cache (4).

15. The method of any of claims 1 to 14, **characterized in that** reconstruction is carried out until a complete message is reconstructed.

16. The method of any of claims 1 to 15, **characterized in that** the reconstruction is carried out using a plurality of data packets included in the data frames.

17. Telecommunications apparatus for protecting services provided over a packet network against attacks, the apparatus comprising
- a frame cache (4) for storing at least one data frame of data traffic related to a service to be protected,
- a reconstruction unit (2) reconstructing a message contained in the at least one data frame,
- a filter unit (3) comprising filtering rules and applying the filtering rules to a reconstructed message provided by the reconstruction unit (2),
- the filter unit (3) further being adapted to provide a verdict on the message on the basis of the filtering rules,
- means that, dependent on the verdict, allow or do not allow the at least one data frame stored in the frame cache (4) to proceed to its destination.

18. The apparatus of claim 17, **characterized in that** the reconstruction unit (2) comprises
- a defragmentation unit (21) for defragmentation of the at least one data frame into one or a plurality of IP packets,
- a stream reconstruction unit (22, 23) reconstructing the IP packets into UDP packets or TCP data streams, and
- an extractor unit (24) for obtaining a message from the UDP packets or TCP data streams.

19. The apparatus of claim 17 or 18, **characterized in that** the reconstruction unit (2) provides messages of an internet telephony protocol to the filter unit (3).

20. The apparatus of any of claims 17 to 19, **characterized by** means that, dependent on the verdict, allow or not allow not only the at least one data frame stored in the frame cache (4) to proceed to its destination but also all frames belonging to the same IP packet, UDP datagram or TCP stream as the data of the at least one frame.

21. The apparatus of any of claims 17 to 20, **characterized by** means (130) modifying the filtering rules or adding filtering rules.

22. The apparatus of claim 21, **characterized in that** the means comprise at least one analyzer unit (120) and at least one decider unit (130), the analyzer unit (120) analysing messages reconstructed by the reconstruction unit (2), wherein the decider unit (130) sets or modifies the filtering rules of the filter unit (3) on the basis of such analysis.

23. The apparatus of claim 22, **characterized in that** the decider unit (130) creates new rules on the basis of an analysis of reconstructed messages and the filter unit (3) applies filtering rules on the reconstructed messages in an asynchronous manner.

24. The apparatus of any of claims 17 to 23, **characterized in that** the filter unit (2) is kernel based.

25. The apparatus of any of claims 17 to 24, **characterized by** a userspace message inspection unit (51) for issuing a verdict.

26. The apparatus of any of claims 17 to 25, **characterized in that** the packet network is the internet (7) and the service to be protected is a Voice-over-IP (VoIP) service provided through the Session Initiation Protocol (SIP) or another internet telephony protocol.

27. The apparatus of any of claims 17 to 26, **characterized in that** the frame cache (4) is of variable size, the size being adaptable at least to the structure of the data of the data traffic and/or the application to which the data traffic belongs.

28. The apparatus of any of claims 17 to 27, **characterized by** means (1) forking the at least one data frame before it is stored in the frame cache (4).

29. The apparatus of claim 28, **characterized in that** the forking means comprise a bridge (1).

30. The apparatus of any of claims 17 to 29, **characterized by** means (110) delivering all data frames belonging to the same IP packet, UDP datagram or TCP stream to the apparatus.

31. The apparatus of any of claims 17 to 30, **characterized in that** the reconstruction unit (2) uses a plurality of data packets included in the data frames for reconstruction.
